# EUROPÄISCHE PATENTSCHRIFT

(11) **EP 1 434 049 B1**
(45) Veröffentlichungstag und Bekanntmachung des Hinweises auf die Patenterteilung: **22.02.2017**
(21) Anmeldenummer: 03029151.2
(22) Anmeldetag: 18.12.2003
(51) Int. Cl.: G01N 27/417, F01N 3/08, F02D 41/22, F01N 13/00, F02D 41/14, F01N 11/00

(54) **Verfahren und Vorrichtung zur Überwachung des NOx-Signals eines NOx-Sensors**
Method of and device for monitoring the NOx signal of an NOx sensor
Procédé et dispositif pour surveiller le signal NOx d'un capteur de NOx

(30) Priorität: 29.12.2002 DE 10261605; 13.01.2003 DE 10300939
(43) Veröffentlichungstag der Anmeldung: 30.06.2004
(73) Patentinhaber: Volkswagen Aktiengesellschaft, 38440 Wolfsburg (DE)
(72) Erfinder: Hahn, Hermann, Dr., 30175 Hannover (DE)
(74) Vertreter: Pohlmann, Bernd Michael

(56) Entgegenhaltungen:
- WO-A-01/55565
- WO-A-02/14659
- DE-A- 10 032 571
- DE-A- 10 049 685
- DE-A- 19 946 628

## Beschreibung

Die Erfindung bezieht sich auf ein Verfahren und eine Vorrichtung gemäß den Oberbegriffen der unabhängigen Patentansprüche.

Bei Kraftfahrzeugen mit modernen Verbrennungsmotoren, die im Mager- und Schichtladebetrieb einen geringeren Kraftstoffverbrauch aufweisen, ist zur Erfüllung der gesetzlichen Abgasvorschriften eine zusätzliche Nachbehandlung der Abgase zur Reduzierung von Stickoxid-Emissionen notwendig. Bevorzugt werden zur Lösung dieses Problems NOx-Speicherkatalysatoren eingesetzt, zu deren Überwachung NOx-Sensoren verwendet werden. Um eine hohe Emissionsstabilität des Motors zu erreichen, ist eine möglichst hohe Genauigkeit bei der Messung der NOx-Konzentration im Abgas, insbesondere für eine präzise Regelung des Magerbetriebs und des Speicherzyklus des NOx-Katalysators erforderlich. Aus der EP 0892265 A1 ist in diesem Zusammenhang bereits ein Gas-Sensor für die Messung von Gasoxiden bekannt, bei dem Abgas zur Messung in ein Doppel-Messkammersystem geführt wird. Die Messkammern weisen für die Messung Nernst-Zellen auf. Während in der ersten Messkammer Sauerstoffmoleküle dem Gasgemisch entzogen werden, wird in der zweiten Messkammer das zu messende Gasoxid, beispielsweise Stickoxid, in Stickstoff und Sauerstoff zerlegt. Eine an die erste Kammer angelegte Pumpzellenspannung wird auf einen konstanten Wert geregelt, der einer konstanten Sauerstoffkonzentration in dieser Kammer entspricht.

Idealerweise zeigt das Ausgangssignal eines NOx-Sensors exakt die tatsächliche NOx-Konzentration des Abgases an. Insbesondere sollte ein NOx-Sensor unter Bedingungen ohne NOx-Emission ein NOx-Signal = 0 liefern. Dies ist beispielsweise von Bedeutung für die Regelung des Speicherzyklus und für die Diagnose eines NOx-Speicherkatalysators mit hoher Einspeicherfähigkeit im Magerbetrieb, bei dem stromab des Speicherkatalysators bei nichtgeschädigtem Speicherkatalysator keine NOx-Emissionen auftreten Hierzu ist es bekannt, die Ausgangssignale eines NOx-Sensors zu korrigieren. So ist aus der DE 19819462 A1 ein Verfahren bekannt, bei dem die Ausgangssignale eines NOx-Sensors mit Hilfe von in Kennfeldern abgelegten Korrekturwerten korrigiert werden. Die Kennfelder sind insbesondere von der Sauerstoffkonzentration und deren Änderungsrate im Abgas sowie von der Temperatur des Sensors sowie des Abgases abhängig Der Meßwert der NOx-Konzentration wird hierbei mit einem mulitplikativen Korrekturwert und einem additiven Korrekturwert korrigiert.

Eine weitere Möglichkeit der genaueren Bestimmung einer NOx-Konzentration ist in der Offenlegungsschrift DE 199 46 628 beschrieben. Unter definierten Betriebsbedingungen wird für einen vorgebbaren Zeitpunkt das NOx-Signal eines Sensors erfasst und mit einem vorgebbaren Sollverlauf verglichen. Aus der Abweichung des Verlaufs wird eine Kontrollgröße ermittelt und mit einem Schwellwert verglichen und ein Hinweis auf die Funktionsfähigkeit eines NOx-Speicherkatalysators abgeleitet. Weiterhin ist aus der Offenlegungsschrift DE 44 41 432 bekannt, das Verhalten von Katalysator und Lambdasonde zu untersuchen, indem eine gezielte Variation der Schadstoffkonzentration vorgenommen wird und das korrespondierende Signal einer dem Katalysator nachgeschaltete Abgassonde bewertet wird.

In der Offenlegungsschrift DE 199 26 139 wird eine Kalibrierung einer Ausgangskennlinie eines NOx-Sensors vorgeschlagen. Es wird ein Kalibrierungspunkt mit einer im wesentlichen bekannten NOx-Konzentration ermittelt, der dem Minimum des NOx-Wertes nach einer Regeneration des Speicherkatalysators entspricht. Alternativ kann ein Wert aus einem Kennfeld als Referenz ausgelesen werden.

Aus der DE 100 49 685 A ist ein Verfahren zur Eigendiagnose eines NOX-Sensors bekannt, wobei die Größe einer Abweichung des Signalverlaufs von plausiblen Werten bestimmt und in Abhängigkeit von Betriebsparametern ein NOx-Sensor - Diagnosesignal gebildet wird.

Auch in der gattungsbildenden Offenlegungsschrift DE 199 11 664 wird eine Kalibrierung der Kennliniensteigung sowie des sogenannten Offset-Wertes einer Ausgangskennlinie eines NOx-Sensors vorgeschlagen. Hierzu wird ein Kalibrierungspunkt ermittelt, an dem von einer bekannten NOx-Konzentration im Abgas, vorzugsweise zwischen 0 und 5 ppm, ausgegangen werden kann, wie etwa in einer Schubabschaltphase der Brennkraftmaschine oder im Leerlauf nach der Regenerierung eines NOx-Speicherkatalysators. Bei der Bestimmung der Kennliniensteigung ist eine On-Bord-Diagnose in einem Fahrzeug mit hinreichender Genauigkeit jedoch schwierig.

Nachteilig an dem bekannten Stand der Technik ist, dass Serienstreuungen im Ansprechverhalten des Sensors nur mit großem Aufwand korrigiert werden können. Ferner sind dynamische Abweichungen des NOx-Signals von dem exakten Messwert, die aus nichtstationären Fluktuationen des Sensor-Regelzustandes resultieren, nicht mit hinreichender Genauigkeit darstellbar. Erschwert wird die Analyse durch Querempfindlichkeiten der verwendeten Sensoren, die z.T. erhebliche Messfehler verursachen können.

Aufgabe der vorliegenden Erfindung ist daher die Schaffung eines Verfahrens, mit dem die Genauigkeit mit der die NOx-Konzentration im Abgas einer Brennkraftmaschine ermittelt wird, erhöht werden kann, sowie eine Vorrichtung zur Durchführung des Verfahrens zu schaffen.

Diese Aufgabe wird erfindungsgemäß mit den Merkmalen der unabhängigen Ansprüche gelöst.

Gemäß einem Aspekt der Erfindung wird eine Aktivität des NOx-Sensorsignals bestimmt, ein die Größe der Aktivität charakterisierender Kennwert gebildet und in Abhängigkeit von Betriebsparametern der Kennwert des NOx-Signals bewertet. Bei unplausiblem NOx-Signal wird bevorzugt ein korrigiertes Signal verwendet.

Unter Aktivität des NOx-Sensors wird die Änderung des NOx-Sensorsignals bei einer Änderung der NOx-Konzentration im Abgas verstanden.

Eine besonders einfache Möglichkeit zur Berücksichtigung von Sauerstoffkonzentrationsfluktutationen, welche das NOx-Signal beeinflussen können, besteht in der Verwendung von Lambdawertsignalen, die vom NOx-Sensor selbst zur Verfügung gestellt werden.

Nachfolgend wird die Erfindung anhand eines in Zeichnungen dargestellten Ausführungsbeispiels näher beschrieben.

Es zeigen in schematischer Darstellung:
- Figur 1: eine Brennkraftmaschine mit zugeordneter Abgasanlage,
- Figur 2: einen NOx-Sensor,
- Figur 3: das Ausgangssignal eines NOx-Sensors in Abhängigkeit der NOx-Konzentration mit Offset-Anteil und Gain.

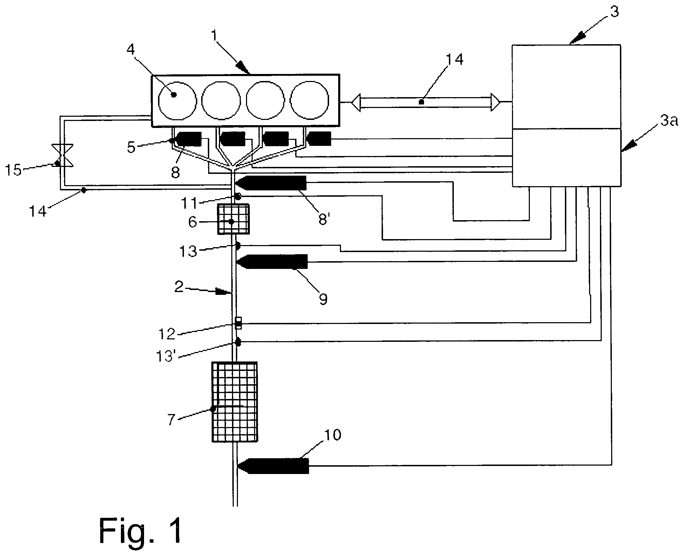

Figur 1 zeigt zur Veranschaulichung verschiedener Einbaulagen von NOx-Sensoren in schematischer Darstellung eine Brennkraftmaschine 1, beispielsweise ein magerlauffähiger Ottomotor oder eine Dieselbrennkraftmaschine, mit einer Abgasanlage 2 und einem Motorsteuergerät 3, vorzugsweise zum Betrieb eines Kraftfahrzeugs. Die Brennkraftmaschine 1 weist eine Anzahl von Zylinderbänken 4 auf (entsprechende Komponenten sind nur mit einem Bezugszeichen versehen), denen jeweils ein eigener Abgaspfad 5 nachgeschaltet ist. In der Abgasanlage 2 ist zur Konvertierung von schädlichen oder unerwünschten Komponenten des Abgases in andere Komponenten eine Abgasreinigungsvorrichtung mit einem Vorkatalysator 6 und einem Hauptkatalysator 7 angeordnet. Der Vorkatalysator 6 ist als 3-Wege-Katalysator und der Hauptkatalysator 7 als NOx-Speicherkatalysator ausgebildet. Stromabwärts der Zylinderbänke 4 sind in den Abgaspfaden 5 NOx-Sensoren 8 angeordnet, mit denen die NOx-Konzentration des durch die Abgasanlage 2 geführten Abgases der Brennkraftmaschine 1 gemessen werden kann. Stromaufwärts des Vorkatalysators 6 ist zudem ein weiterer NOx-Sensor 8' angeordnet. In einem Bereich der Abgasanlage 2 zwischen dem Vorkatalysator 6 und dem Hauptkatalysator 7, stromabwärts des Vorkatalysators 6 und stromaufwärts des Hauptkatalysators 7, ist ein weiterer NOx-Sensor 9 angeordnet. Ein weiterer NOx-Sensor 10 ist stromabwärts des Hauptkatalysators 7 in der Abgasanlage 2 angeordnet. Es versteht sich von selbst, dass bei einer Abgasreinigungsvorrichtung mit mehreren Teilen, Sensoren stromauf oder stromab der jeweiligen Teile angeordnet sein können.

Zusätzlich zu den erwähnten Sensoren sind stromaufwärts und stromabwärts des Vorkatalysators 6 und stromaufwärts des Hauptkatalysators 7 Lambda-Sonden 11 bzw. 12 sowie zur Ermittlung der Betriebstemperatur der Katalysatoreinrichtungen Temperatursensoren 13, 13' vorgesehen. Es versteht sich von selbst, dass alternativ oder zusätzlich weitere Temperatursensoren zur Messung der Betriebstemperatur der Abgasreinigungsvorrichtung oder von Teilen dieser vorgesehen sein können. Zur Abgasrückführung weist die Brennkraftmaschine 1 eine Abgasrückführeinrichtung 14 mit einem steuerbaren Ventil 15 auf.

Das Motorsteuergerät 3 erfasst in an sich bekannter Weise über nicht dargestellte weitere Sensoren Betriebsparameter der Brennkraftmaschine 1, wie beispielsweise Drosselklappenstellung, Abgasrückführungsrate, Zündzeitpunkt, Einspritzzeitpunkt von Vor- / Haupt- / Nacheinspritzungen, Einspritzdruck, Tumble-Klappenstellung, Ladedruck, Phasensteller der Nockenwelle, Drehzahl, Fahrpedalstellung, Last, Fahrgeschwindigkeit und dergleichen, und kann diese über (nicht dargestellte) Stellglieder gegebenenfalls beeinflussen, wobei zur Kommunikation zwischen dem Motorsteuergerät 3 und den Sensoren bzw. Stellgliedern ein Kabelsystem 14 oder dergleichen vorgesehen ist. Ferner umfasst das Motorsteuergerät 3 eine Lambda-Regeleinrichtung zur Regelung der Sauerstoffkonzentration im Abgas bzw. des Lambda-Werts. Das Motorsteuergerät 3 erhält von den NOx-Sensoren NOx-Signale mit denen die NOx-Rohemissionen der Brennkraftmaschine 1 bzw. die NOx-Konzentration stromabwärts der Katalysatoreinrichtungen 6 und / oder 7 ermittelt werden können.

Der NOx-Speicherkatalysator 7 wird üblicherweise in einem Speicherzyklus betrieben, der zumindest einen Adsorptionsmodus und einen Regenerationsmodus umfasst. Die adsorptive Speicherung erfolgt dabei bei einem Lambda-Wert >1, die Ausspeicherung zu einem späteren Zeitpunkt bei einem Lambda-Wert <1 oder =1.

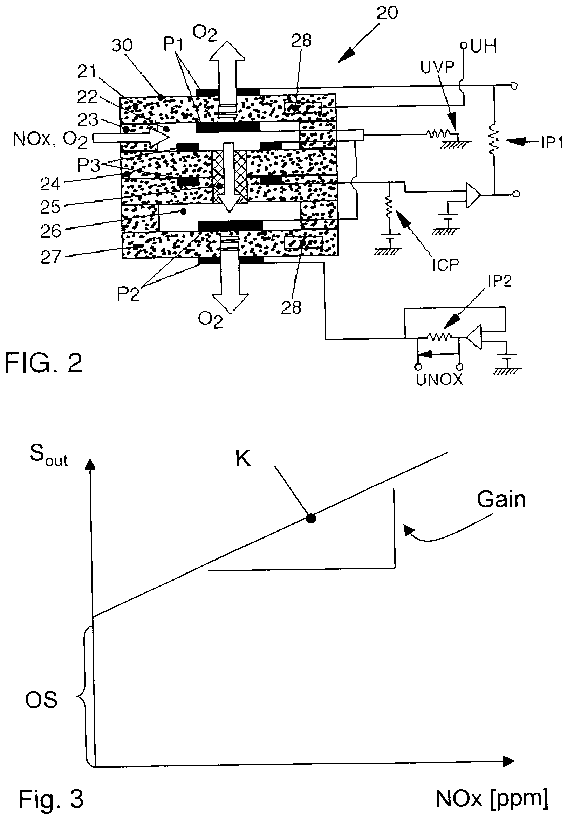

Der in Figur 2 dargestellte NOx-Sensor 20 zur Messung der NOx-Konzentration im Abgas besteht aus einer Keramik 30 und ist als Doppelkammersensor mit einer ersten und zweiten Messkammer 22, 26 ausgebildet. Über eine Diffusionsbarriere 23 kann ein Teil des Abgases mit NOx-, 02- und weiteren Komponenten die erste Messkammer 22 erreichen. Die Messkammer 22 weist eine nach dem Nernst-Prinzip arbeitende Sauerstoff-Messpumpzelle 21 mit Pumpelektroden P1 auf. Mittels letzterer kann der Sauerstoffgehalt in der Messkammer 22 verändert werden. Über eine weitere Diffusionsbarriere 25 gelangt Abgas in die zweite Messkammer 26. Diese weist eine ebenfalls nach dem Nernst-Prinzip arbeitende NOx-Messpumpzelle 27 mit Pumpelektroden P2 auf. Die im Abgas enthaltenen Stickoxide werden durch ein spezielles Material der inneren P2-Elektroden katalytisch in die Komponenten N2 und 02 zerlegt. Zur Kalibrierung des Systems wird eine O2-Referenzzell 24 mit Elektroden P3 verwendet.

An die Sauerstoff-Messpumpzelle 21 wird eine Pumpspannung angelegt. Der Strom ICP wird so geregelt, dass ein konstanter, vorzugsweise stöchiometrischer Wert der Sauerstoff-Konzentration in der ersten Messkammer 22 resultiert. Aus dem Pumpstrom IP1 wird ein Breitband-Lambdawert berechnet. Die Spannung UVP entspricht einem Lambdasprungsignal. Über den Pumpzellenstrom IP2 der Messkammer 26 kann ein der NOx-Konzentration im Abgas entsprechendes Spannungssignal UNOX ermittelt werden.

Um eine für eine NOx -Messung erforderliche Mindesttemperatur von z.B. 740 Grad zu gewährleisten, weist der NOx-Sensor 20 Heizelemente 28 auf, denen eine Heizspannung UH von einer nicht dargestellten Heizungseinrichtung zugeführt wird. ist. Eine zugeordnete, nicht dargestellte Temperatur-Messeinrichtung gibt ein Temperatursignal ab, aus dem die NOx-Sensortemperatur ermittelbar wird.

Die Einregelung der Sauerstoffmesspumpzelle 21 erfolgt typischerweise über kürzere Zeiten (<= 1 sec) als die der NOx-Messpumpzelle 27 (3-4 sec). Dabei hängt das NOx-Signal von vielen Einflussgrößen wie beispielsweise Temperaturschwankungen am Sensor, stationärer Gasdruck am Sensor, Sauerstoffkonzentration, NH3-Emission oder dergleichen ab. Der Effekt dieser Einflussgrößen kann in an sich bekannter Weise kompensiert werden, sobald es sich um stationäre Störungen handelt. Jedoch können die durch nicht stationäre Störungen oder Fluktuationen erzeugten Abweichungen des NOx-Signals vom exakten Messwert kurzzeitig größer sein als die durch stationäre Störungen bewirkten, da bei diesen dynamischen Vorgängen die Sauerstoffmesspumpzelle 21 und die NOx-Messpumpzelle 27 nicht ins Gleichgewicht eingeregelt sind. Nicht stationäre Fluktuationen des Sensor-Regelzustandes werden vor allem durch Fluktuationen in der Abgaszusammensetzung bewirkt. Weitere den Sensor-Regelzustand beeinflussende Größen sind vor allem die Abgasgeschwindigkeit in Sensornähe, die Sensortemperatur und die Abgastemperatur. Da der Sauerstoffzustrom ICP der Sauerstoffmesspumpzelle 21 als Integral des Potentialgefälles über die gesamte Zelle eingestellt wird, kann es im Falle dynamischer Änderungen der Abgaszusammensetzung, insbesondere bei Änderungen in der Sauerstoffkonzentration in der Zelle zu gegenüber dem Regel-Sollwert höheren oder niedrigeren Sauerstoffdurchlässen in die NOx-Messpumpzelle 27 kommen.

Das NOx-Signal bekannter NOx-Sensoren weist einen Offset-Anteil und einen weiteren Anteil auf, der sich, unter Vernachlässigung sonstiger Quereinflüsse in Abhängigkeit einer NOx-Konzentration ergibt, wie in Fig. 3 dargestellt ist. Der Offset-Anteil OS entspricht dem Achsenabschnitt des Ausgangssignals Sₒᵤₜ, welches dem Spannungssignal UNOX entspricht. Die Steigung des Ausgangssignals über der NOx-Konzentration im Punkt K, im folgenden als Gain bezeichnet, welches im interessierenden Bereich im wesentlichen linear verläuft, spiegelt die Aktivität des NOx-Sensors, d. h. die Änderung des NOx-Sensorsignals bei einer Änderung der NOx-Konzentration im Abgas, wieder. In einem linearen Bereich lässt sich aus der Aktivität der Gain des NOx-Sensors ermitteln.

Bei Alterung des NOx-Sensors oder im Falle eines Defektes können sich Änderungen in der dargestellten Charakteristik ergeben, die zu einem deutlich von der Realität abweichenden NOx-Signal führen. Weiterhin wird die Charakteristik durch Querempfindlichkeiten des NOx-Sensors beeinflusst. So sind z.B. bei einer On-Bord-Diagnose Einflüsse, die die Zusammensetzung des Abgases betreffen. unvermeidlich, insbesondere beim Auftreten von NH₃, welches bei fetten Gemischzuständen in den Katalysatoren 6, 7 entstehen kann und im Sensor 20 dann zu NOx umgesetzt und detektiert wird. Ebenso treten dynamische Änderungen der Sauerstoffkonzentration auf, die eine vorübergehend instationäre Pumpleistung der Sauerstoff-Messpumpzelle 21 bewirken. Diese führen zu einer Veränderung des Sollwertes von Sauerstoff, der in die NOx-Messkammer 26 gelangt und der dort fälschlicherweise als NOx detektiert wird.

Erfindungsgemäß wird das NOx-Signal von zumindest einem der NOx-Sensoren 8, 8', 9, 10, 20 überwacht und auf Plausibilität untersucht. Hierzu weist das Motorsteuergerät 3 eine Steuereinheit 3a auf, welches die NOx-Signale in Abhängigkeit von Betriebsparametern bewertet. Vorzugsweise wird eine Aktivität des NOx-Sensorsignals bestimmt und ein die Größe der Aktivität charakterisierender Kennwert gebildet. In Abhängigkeit von Betriebsparametern wird der Kennwert des NOx-Signals bewertet, und bei unplausiblem Kennwert wird ein Fehlersignal erzeugt. Günstig ist, zumindest den NOx-Sensor 10 stromab des Hauptkatalysators 7 zur Plausibilitätsbetrachtung heranzuziehen.

Die Untersuchung der Plausibilität erfolgt in Abhängigkeit von Grössen, die Einflüsse auf das NOx-Signal beschreiben, insbesondere von Betriebspunkten der Brennkraftmaschine 1. Eine weitere Einflussgrösse, die das Messsignal beeinflusst, ist eine Menge NOx am Einbauort des NOx-Sensors 8, 8', 9, 10, 20, beispielsweise in Abhängigkeit eines an anderer Stelle ermittelten Katalysatorzustandswerts.

Die Aktivität des NOx-Signals kann z.B. durch an sich bekannte statistische mathematische Verfahren ausgewertet werden, bei denen ein Kennwert für die Aktivität des NOx-Signals bestimmt wird. Bevorzugt sind solche statistischen mathematischen Verfahren, bei denen das NOx-Signal einer Filterung unterzogen wird, um ein Signal mit reduzierten Fluktuationen zu gewinnen. Vorzugsweise wird eine Tiefpassfilterung verwendet, die höher frequente Fluktuationen im NOx-Signal beseitigt. Insbesondere kann ein gleitender Mittelwert gebildet werden, bei dem die Werte des Signals mit reduzierten Fluktuationen nach folgender Rechenvorschrift iterativ bestimmt werden: aktueller ausgegebener Wert = vorheriger ausgegebener Wert + (aktueller NOx-Signalwert - vorheriger ausgegebener Wert) *F, F = Filterfaktor. Bei einem Filterfaktor F nahe 1 wird der jeweilige aktuelle NOx-Signalwert kaum gefiltert. Bei stärkeren Fluktuationen wird ein kleinerer Filterfaktor gewählt, der eine stärkere Glättung des NOx-Signals bewirkt. Bei den für die Bildung des Mittelwertes verwendeten NOx-Signalwerten kann es sich um NOx-Signalwerte eines vorgegebenen Zeitintervalls der um NOx-Signalwerte, der die gleichen oder ähnlichen Betriebsparameterwerten zugeordnet sind, handeln. Der Kennwert für die Aktivität des NOx-Signals ergibt sich dann aus dem Mittelwert. Reagiert das NOx-Signal kaum, d.h. ist der Gain gering, entspricht dem ein niedriger Aktivitätswert. Ist der Gain stark vergrößert, entspricht dem ein hoher Aktivitätswert. Ergeben die Einflussfaktoren jedoch, dass die Aktivität des NOx-Signals gering sein sollte, wird ein vergrößerter Gain als Fehler erkannt. Der Aktivitätswert kann daher zur Plausibilisierung des NOx-Signals und damit zu seiner Diagnose herangezogen werden.

Vorzugsweise wird zur Überwachung der Aktivität des NOx-Signals ein Modell verwendet, welches ein erwartetes Verhalten von Brennkraftmaschine und Abgassystem und damit ein entsprechendes Verhalten des NOx-Signals beinhaltet.

Die jeweiligen Werte der Betriebsparameter der Brennkraftmaschine 1 und des Fahrzeugs, welches von der Brennkraftmaschine 1 angetrieben wird, lassen jeweils eine bestimmte Änderung der Abgaszusammensetzung und Abgasmenge erwarten, die ein entsprechendes NOx-Signal ergeben sollten. Bevorzugt erfolgt die Plausibilitätsbetrachtung bei Betriebszuständen mit verstärkt auftretenden dynamischen Sauerstoffkonzentrationsfluktuationen und/oder bei Betriebszuständen mit einer erhöhten Ammoniakkonzentration im Abgas.

Bevorzugt erfolgt die Plausibilitätsbetrachtung ferner in Abhängigkeit von einem NOx-Katalysatorzustandswert,

Zur Erfassung der Sauerstoffkonzentrations-fluktuationen kann ein Lambdawertsignal, vorzugsweise ein Zweipunkt- und/oder ein Breitbandlambdasignal des NOx-Sensors 8, 8', 9, 10, 20 verwendet werden.

Durch dynamische Sauerstoffkonzentrationsfluktuationen, Betriebszustände mit einer erhöhten Ammoniakkonzentration im Abgas und/oder einem verschlechterten NOx-Katalysatorzustand sind erhöhte Werte des NOx-Signals zu erwarten. Werden diese von Steuereinheit 3a registriert, so wird das NOx-Signal als plausibel bewertet. Wird unter den genannten Bedingungen kein erhöhter Wert des NOx-Signals registriert, so wird das NOx-Signal als unplausibel bewertet. Nach der Registrierung von derartigen unplausiblen Werten des NOx-Signals kann für ein vorgegebenes Zeitintervall das betreffende NOx-Signal für die Motorsteuerung außer Betracht gelassen werden und/oder durch ein korrigiertes Signal ersetzt werden.

Ein fehlerhafter NOx-Sensor 8, 8', 9, 10, 20 kann leicht erkannt werden, wenn, bei mehreren vorhandenen NOx-Sensoren 8, 8', 9, 10, 20, das Verhalten der einzelnen Sensoren 8, 8', 9, 10, 20 untereinander verglichen wird. Verhalten sich alle gleich unplausibel, so kann dies zur Beurteilung eines möglichen Fehlerzustands eines der Katalysatoren 6, 7 herangezogen werden.

Wird ein zu großer oder zu geringer Gain gemessen, und ist dieser Wert unplausibel, kann statt dem gemessenen unplausiblen NOx-Signal ein Wert vorgegeben werden, der um einen gewünschten Faktor verkleinert bzw vergrößert ist. Besonders zweckmäßig ist, das NOx-Signal in Abhängigkeit von dem Katalysatorzustandswert zu korrigieren. Ebenso kann ein Fehlersignal erzeugt und im Motorsteuergerät 3 verarbeitet werden. Zweckmäßigerweise können bei mehrmaligem hintereinander folgenden Auftreten eines unplausiblen NOx-Signals im Motorsteuergerät 3 Informationen hinterlegt werden, dass der NOx-Sensor 8, 8', 9, 10, 20 und/oder die Katalysatoren 6, 7 auf ihre Funktion überprüft werden sollten.

## Patentansprüche

1. Verfahren zur Überwachung eines NOx-Signals eines in der Abgasanlage (2) einer Brennkraftmaschine (1) angeordneten NOx-Sensors (8, 8', 9, 10, 20), wobei das NOx-Signal des NOx-Sensors (8, 8', 9, 10, 20) in Abhangigkeit von Betriebsparametern der Brennkraftmaschine (1) auf Plausibilität untersucht wird, **dadurch gekennzeichnet, dass** zur Untersuchung der Plausibilität
- eine Aktivität des NOx-Signals, welche einer Änderung des NOx-Sensorsignals bei einer Änderung der NOx-Konzentration im Abgas entspricht, bestimmt wird
- ein die Größe der Aktivität charakterisierender Kennwert gebildet wird und
- in Abhängigkeit von besagten Betriebsparametern der Kennwert des NOx-Signals bewertet wird.

2. Verfahren nach Anspruch 1, **dadurch gekennzeichnet, dass** die Abgasanlage (2) einen NOx- Speicherkatalysator (7) aufweist und die Plausibilität in Abhängigkeit von einem Katalysatorzustandswert untersucht wird.

3. Verfahren nach Anspruch 1 oder 2, **dadurch gekennzeichnet, dass** die Plausibilität bei Betriebszuständen mit auftretenden Sauerstoffkonzentrationsänderungen untersucht wird.

4. Verfahren nach einem der vorhergehenden Ansprüche, **dadurch gekennzeichnet, dass** die Plausibilität bei Betriebszuständen mit einer Ammoniakkonzentration im Abgas untersucht wird.

5. Verfahren nach einem der vorhergehenden Ansprüche, **dadurch gekennzeichnet, dass** der Kennwert der Aktivität mit statistischen mathematischen Verfahren gewonnen wird.

6. Verfahren nach einem der vorhergehenden Ansprüche, **dadurch gekennzeichnet, dass** bei unplausiblem NOx-Signal ein korrigiertes NOx-Signal gebildet wird.

7. Verfahren nach einem der vorhergehenden Ansprüche, **dadurch gekennzeichnet, dass** bei unplausiblem NOx-Signal ein Fehlersignal erzeugt wird.

8. Verfahren nach Anspruch 3, **dadurch gekennzeichnet, dass** zu einer Erfassung von Sauerstoffkonzentrations-fluktuationen ein Lambdawertsignal des NOx-Sensors (8, 8', 9, 10, 20) verwendet wird.

9. Verfahren nach Anspruch 8, **dadurch gekennzeichnet, dass** zu einer Erfassung von Sauerstoffkonzentrations-fluktuationen ein Zweipunkt- und / oder ein Breitbandlambdasignal des NOx-Sensors (8, 8', 9, 10, 20) verwendet wird.

10. Vorrichtung enthaltend ein Motorsteuergerät (3) zur Überwachung eines NOx Signals eines in der Abgasanlage (2) einer Brennkraftmaschine (1) angeordneten NOx-Sensors (8, 8', 9, 10, 20), wobei das NOx-Signal des NOx-Sensors (8, 8', 9, 10, 20) in Abhängigkeit von Betriebsparametern der Brennkraftmaschine (1) auf Plausibilität untersucht und die Betriebsparameter über Sensoren von dem Motorsteuergerat (3) erfasst werden, **dadurch gekennzeichnet, dass** das Motorsteuergerät (3) eine Steuereinheit (3a) aufweist, welche geeignet und bestimmt dazu ist, das NOx-Signal in Abhängigkeit der besagten Betriebsparameter zu bewerten, wobei die Aktivität des NOx-Sensorsignals welche einer Änderung des NOx-Sensorsignals bei einer Änderung der NOx-Konzentration im Abgas entspricht, bestimmt wird, ein die Größe der Aktivität charakterisierender Kennwert gebildet wird und in Abhängigkeit von den Betriebsparametern der Kennwert des NOx-Signals bewertet, und bei unplausiblem Kennwert ein Fehlersignal erzeugt werden kann.

## Claims

1. Method for monitoring a NOx signal of a NOx sensor (8, 8', 9, 10, 20) arranged in the exhaust system (2) of an internal combustion engine (1), wherein the NOx signal of the NOx sensor (8, 8', 9, 10, 20) is checked for plausibility in a manner dependent on operating parameters of the internal combustion engine (1), **characterized in that**, for the checking for plausibility,
- an activity of the NOx signal which corresponds to a change in the NOx sensor signal in the event of a change in the NOx concentration in the exhaust gas is determined,
- a characteristic value that characterizes the magnitude of the activity is formed, and
- the characteristic value of the NOx signal is evaluated in a manner dependent on said operating parameters.

2. Method according to Claim 1, **characterized in that** the exhaust system (2) has a NOx storage catalytic converter (7), and the checking for plausibility is performed in a manner dependent on a catalytic converter state value.

3. Method according to Claim 1 or 2, **characterized in that** the checking for plausibility is performed in the presence of operating states in which changes in oxygen concentration occur.

4. Method according to one of the preceding claims, **characterized in that** the checking for plausibility is performed in the presence of operating states with an ammonia concentration in the exhaust gas.

5. Method according to one of the preceding claims, **characterized in that** the characteristic value of the activity is obtained using statistical mathematical methods.

6. Method according to one of the preceding claims, **characterized in that**, in the presence of an implausible NOx signal, a corrected NOx signal is formed.

7. Method according to one of the preceding claims, **characterized in that**, in the case of an implausible NOx signal, an error signal is generated.

8. Method according to Claim 3, **characterized in that** a lambda value signal of the NOx sensor (8, 8', 9, 10, 20) is used for a detection of oxygen concentration fluctuations.

9. Method according to Claim 8, **characterized in that** a binary and/or broadband lambda signal of the NOx sensor (8, 8', 9, 10, 20) is used for a detection of oxygen concentration fluctuations.

10. Device comprising an engine control unit (3) for monitoring a NOx signal of a NOx sensor (8, 8', 9, 10, 20) arranged in the exhaust system (2) of an internal combustion engine (1), wherein the NOx signal of the NOx sensor (8, 8', 9, 10, 20) is checked for plausibility in a manner dependent on operating parameters of the internal combustion engine (1), and the operating parameters are detected by the engine control unit (3) by way of sensors, **characterized in that** the engine control unit (3) has a control unit (3a) which is suitable and designed for evaluating the NOx signal in a manner dependent on said operating parameters, wherein the activity of the NOx signal which corresponds to a change in the NOx sensor signal in the event of a change in the NOx concentration in the exhaust gas is determined, a characteristic value that characterizes the magnitude of the activity is formed, and the characteristic value of the NOx signal is evaluated in a manner dependent on the operating parameters, and, in the case of an implausible NOx signal, an error signal can be generated.

## Revendications

1. Procédé de surveillance d'un signal NOx d'un capteur de NOx (8, 8', 9, 10, 20) disposé dans l'installation de gaz d'échappement (2) d'un moteur à combustion interne (1), le caractère plausible du signal NOx du capteur de NOx (8, 8', 9, 10, 20) étant examiné en fonction de paramètres de fonctionnement du moteur à combustion interne (1), **caractérisé en ce que** pour examiner le caractère plausible :
- on détermine une activité du signal NOx correspondant à une variation du signal de capteur NOx en cas de variation de la concentration de NOx dans les gaz d'échappement ;
- on forme une valeur caractéristique caractérisant la grandeur de l'activité ; et
- on analyse la valeur caractéristique du signal NOx en fonction desdits paramètres de fonctionnement.

2. Procédé selon la revendication 1, **caractérisé en ce que** l'installation de gaz d'échappement (2) comporte un catalyseur d'accumulateur de NOx (7) et que le caractère plausible est examiné en fonction d'une valeur d'état de catalyseur.

3. Procédé selon la revendication 1 ou 2, **caractérisé en ce que** le caractère plausible est examiné dans des états de fonctionnement avec apparition de variations de concentration en oxygène.

4. Procédé selon l'une quelconque des revendications précédentes, **caractérisé en ce que** le caractère plausible est examiné dans des états de fonctionnement avec une concentration d'ammoniaque dans les gaz d'échappement.

5. Procédé selon l'une quelconque des revendications précédentes, **caractérisé en ce que** la valeur caractéristique de l'activité est obtenue par le biais d'un procédé mathématique statistique.

6. Procédé selon l'une quelconque des revendications précédentes, **caractérisé en ce qu'**en cas de signal NOx non plausible, un signal NOx corrigé est formé.

7. Procédé selon l'une quelconque des revendications précédentes, **caractérisé en ce qu'**en cas de signal NOx non plausible, un signal d'erreur est produit.

8. Procédé selon la revendication 3, **caractérisé en ce qu'**un signal de valeur lambda du capteur de NOx (8, 8', 9, 10, 20) est utilisé pour déterminer les fluctuations de concentration en oxygène.

9. Procédé selon la revendication 8, **caractérisé en ce que** pour déterminer les fluctuations de concentration en oxygène, on utilise un signal lambda à large bande et/ou à deux points du capteur de NOx (8, 8', 9, 10, 20).

10. Dispositif contenant un appareil de commande du moteur (3) pour surveiller un signal NOx d'un capteur de NOx (8, 8', 9, 10, 20) disposé dans l'installation de gaz d'échappement (2) d'un moteur à combustion interne (1), le caractère plausible du signal NOx du capteur de NOx (8, 8', 9, 10, 20) étant examiné en fonction de paramètres de fonctionnement du moteur à combustion interne (1) et les paramètres de fonctionnement étant détectés par l'appareil de commande du moteur (3) via des capteurs, **caractérisé en ce que** l'appareil de commande du moteur (3) comporte une unité de commande (3a) adaptée et déterminée pour analyser le signal NOx en fonction desdits paramètres de fonctionnement, l'activité du signal de capteur de NOx correspondant à une variation du signal de capteur de NOx est déterminée en cas de variation de la concentration de NOx dans les gaz d'échappement, une valeur caractéristique caractérisant la grandeur de l'activité étant formée et la valeur caractéristique du signal NOx étant analysée en fonction des paramètres de fonctionnement et un signal d'erreur pouvant être produit en cas de valeur caractéristique non plausible.
